(19) **Europäisches Patentamt**

**European Patent Office**

**Office européen des brevets**

(11) **EP 1 505 046 A1**

(12) **EUROPEAN PATENT APPLICATION**

(43) Date of publication:
**09.02.2005 Bulletin 2005/06**

(51) Int Cl.[7]: **C05B 7/00**, C05B 17/00,
C05C 5/00, C05C 5/04

(21) Application number: **04425040.5**

(22) Date of filing: **23.01.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **04.08.2003 IT BO20030476**

(71) Applicant: **Biolchim S.P.A
40059 Medicina (BO) (IT)**

(72) Inventor: **Zamboni, Gianni
40064 Ozzano Emilia (BO) (IT)**

(74) Representative: **Trentini, Ermanno, Ing.
Viale A. Aldini, 118
40136 Bologna (IT)**

(54) **Water-soluble powder fertilizer containing phosphorus (P2O5) and calcium (Ca0) in different ratios**

(57)     The invention pertains to a water-soluble chemical powder fertilizer containing Phosphorous ($P_2O_5$) and Calcium (CaO) in different ratios.

**EP 1 505 046 A1**

**Description**

The present industrial invention pertains to a water-soluble powder fertilizer whose formulation contains Phosphorous ($P_2O_5$) and Calcium (CaO) in the presence of a specific co-formulant.

With regard to chemical fertilizers in general, it may be affirmed that the fertilizers today available on the market use Urea Phosphate as a raw material for supplying Phosphorous to be mixed with other elements, including Calcium. This is due to the fact that dry mixtures of phosphate sources other Urea Phosphate with Calcium nitrate or other Calcium salts and microelements that are not chelated, result in turbid aqueous solutions and hence the formation of precipitates.

The aim of the present invention is primarily to eliminate this drawback by introducing into the production formula a "co-formulant" which prevents Calcium and other elements from precipitating in the presence of Phosphates.

The co-formulant to which this invention pertains allows the dry mixture of:

Monoammonium phosphate 12/61
Diammonium phosphate 21/53
Monopotassium phosphate 52/34
Sodium Phosphate or other phosphates
With:

Calcium nitrate or other Calcium salts
Magnesium nitrate or other Magnesium salts
Iron sulphate or nitrate or chloride
Copper sulphate or nitrate or chloride
Manganese sulphate or nitrate or chloride
Zinc sulphate or nitrate or chloride
Sodium or ammonium molybdate
Boric acid or Sodium borate
Potassium nitrate or chloride
Ammonium nitrate
Urea
Each of these ingredients, depending on titre one wishes to obtain, may be used in percentages ranging from a minimum of 1% to a maximum of 99%, insofar as regards:

Monoammonium phosphate
Diammonium phosphate
Monopotassium phosphate
Sodium Phosphate or other phosphates
Calcium nitrate or other Calcium salts
Magnesium nitrate or other Magnesium salts
Potassium nitrate or chloride
Ammonium nitrate
Urea
Whereas as regards:

Iron sulphate or nitrate or chloride

Copper sulphate or nitrate or chloride
Manganese sulphate or nitrate or chloride
Zinc sulphate or nitrate or chloride
Sodium or ammonium molybdate
Boric acid or Sodium borate

the quantities of each included in the various formulations may range from 0% to a maximum of 50%.

The co-formulant is added in a percentage that will vary according to the quantity of CaO provided by Calcium Nitrate or other Calcium Salts and of Phosphorous ($P_2O_5$) provided by the above-specified phosphates.

These and other aims are accomplished by the co-formulant of the present invention, which basically consists in a dry mixture of the following ingredients:

Phosphorous acid ($H_3PO_3$)
EDTA acid (EDTA-$H_4$)
Citric acid ($C_6H_8O_7$)

or other organic acids in crystalline form.

The percentages of each in the mixture may range from 0.5 to 99.5%.

<u>Phosphorous acid ($H_3PO_3$)</u>

is the base of this co-formulant, but it is obviously also possible to use its derivates, i.e. hypophosphorous acid, polyphosphorous acid and poly-hypophosphorous acid.

Phosphorous acid is already known both as source of phosphorous and for its characteristic of facilitating the solubility of different elements in aqueous solutions.

Furthermore, it prevents the formation of precipitates in solutions containing Ammonium, Sodium or Potassium phosphates together with Calcium salts.

This characteristic is enhanced by the presence of citric acid or any other organic acid.

<u>EDTA acid</u>

despite being known for its low solubility, it plays a role in the preparation of the co-formulant by improving the latter's activity. The solubility of EDTA increases when it meets complexable cations in the aqueous solution.

<u>Anhydrous citric acid</u>

it plays a role together with phosphorous acid in enhancing the solubility of saline solutions. It also performs a complexing action on meso-elements and microelements.

In the preparation of the co-formulant, it may be replaced with any other organic acid.

These and other characteristics will be clarified in relation to a simple application of the invention, whose illustration does not restrict the scope of this patent.

Regardless of the other macro- and meso-elements which may be present in the formulation ($K_2O$, MgO), the co-formulant is used on the basis of the following calculation:

For every percentage point of $P_2O_5$ provided by the above-specified phosphates, 0.4% of the co-formulant must be added.

For every percentage point of CaO provided by the above-specified Salts, 0.1% of the co-formulant must be added.

$$Ex.\ NPK_{12\text{-}10\text{-}20}+8\ CaO$$

$$\%\ P_2O_5=10\ X\ 0.4\ \ =4$$

$$\%CaO=\ \ 8\ X\ 0.1\ \ =\underline{0.8}$$

$$4.8$$

In this case, 4.8% of co-formulant will have to be added in the production formula.

$$Ex.\ NPK_{12\text{-}5\text{-}20}+10\ CaO$$

$$\%\ P_2O_5=5\ X\ 0.4=2$$

$$\%\ CaO=10\ X\ 0.1=\underline{1}$$

$$3$$

In this case, 3% of co-formulant will have to be added in the production formula.

$$Ex.\ NPK_{12\text{-}20\text{-}12}+8\ CaO$$

$$\%\ P_2O_5=20\ X\ 0.4=\ 8$$

$$\%\ CaO=\ 8\ X\ 0.1=\underline{0.8}$$

$$8.8$$

In this case, 8.8% of co-formulant will have to be added in the production formula.

It is preferable to use phosphates other than urea phosphate to obtain Calcium-containing mixtures in order to avoid the presence of ureic Nitrogen, not welcomed by farmers.

In fact, all the different formulations will result in only nitric and ammoniacal Nitrogen. However, this does not preclude the possible presence of ureic Nitrogen as well, as it may be added simply by including urea in the formula.

Compared to other phosphates, urea phosphate has the drawback of being more hygroscopic; hence it may more easily cause hardening of the fertilizer when present in formulations with a high $P_2O_5$ content.

Urea phosphate contains 44% $P_2O_5$ whereas other phosphates contain 52%, 53% and 61%; therefore, using other phosphates it is possible to obtain in NPK or NP or NK or PK with a higher content of macroelements.

In practice the formulation details, ingredients and other aspects of the invention may vary without departing from the scope of the present industrial patent; in fact, the invention thus conceived lends itself to numerous adaptations and variants, all falling within the realm of the inventive concept. In addition, all the elements may be replaced by other chemically equivalent ones.

**Claims**

1. **WATER-SOLUBLE POWDER FERTILIZER CONTAINING PHOSPHOROUS ($P_2O_5$) AND CALCIUM (CaO) IN DIFFERENT RATIOS** including the following in a dry mixture, in varying percentages depending on the titres one wishes to obtain:

    Monoammonium phosphate 12/61
    Diammonium phosphate 21/53
    Monopotassium phosphate 52/34
    Sodium Phosphate or other phosphates
       With:

    Calcium nitrate or other Calcium salts
    Magnesium nitrate or other Magnesium salts
    Iron sulphate or nitrate or chloride
    Copper sulphate or nitrate or chloride
    Manganese sulphate or nitrate or chloride
    Zinc sulphate or nitrate or chloride
    Sodium or ammonium molybdate
    Boric acid or Sodium borate
    Potassium nitrate or chloride
    Ammonium nitrate
    Urea

    **Characterised by** the fact that the co-formulant included in the fertilizer production formula to prevent the precipitation of Calcium and other elements in the presence of the above-mentioned phosphates, added in varying percentages according to the quantity of CaO provided by Calcium and other Salts and the quantity of $P_2O_5$ provided by the above-specified Phosphates, based on a calculation of 0.4% of co-formulant for every percentage point of $P_2O_5$ plus 0.1% of co-formulant for every percentage point of CaO, is a mixture of the following ingredients:

Phosphorous acid ($H_3PO_3$)
or alternatively hypophosphorous, polyphosphorous or poly-hypophosphorous acid.
EDTA acid (EDTA-$H_4$)
Citric acid ($C_6H_8O_7$)
or alternatively any other organic acid in crystalline form.

The percentages of each in the mixture may range from 0.5 to 99.5%.

2.  **WATER-SOLUBLE POWDER FERTILIZER CONTAINING PHOSPHOROUS ($P_2O_5$) AND CALCIUM (CaO) IN DIFFERENT RATIOS** according to the main claim, further **characterised by** the fact that the use of phosphates other than urea phosphate prevents the formation of ureic Nitrogen to the benefit of nitric and ammoniacal Nitrogen.

3.  **WATER-SOLUBLE POWDER FERTILIZER CONTAINING PHOSPHOROUS ($P_2O_5$) AND CALCIUM (CaO) IN DIFFERENT RATIOS** according to the main claim, further **characterised by** the fact that the use of phosphates other than urea phosphate, which is more hygroscopic, results in less hardening of the fertilizer.

4.  **WATER-SOLUBLE POWDER FERTILIZER CONTAINING PHOSPHOROUS ($P_2O_5$) AND CALCIUM (CaO) IN DIFFERENT RATIOS** according to the main claim, further **characterised by** the fact that the use of phosphates other than urea phosphate, having $P_2O_5$ contents of 52%, 53% and 61%, makes it possible to obtain NPK, NP, NK and PK with a higher content of macroelements.

**European Patent Office**

## EUROPEAN SEARCH REPORT

Application Number

EP 04 42 5040

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 312 493 B1 (TERLINGEN JOHANNES GIJSBERTUS ET AL) 6 November 2001 (2001-11-06) * the whole document * | 1-4 | C05B7/00 C05B17/00 C05C5/00 C05C5/04 |
| X | US 2002/129632 A1 (SHEPPARDSON COLIN ET AL) 19 September 2002 (2002-09-19) * the whole document * | 1-4 | |
| A | US 5 286 272 A (BIAMONTE RICHARD L ET AL) 15 February 1994 (1994-02-15) * column 2, line 67 - column 3, line 11 * * claim 1 * | 1-4 | |
| T | US 5 514 200 A (LOVATT CAROL J) 7 May 1996 (1996-05-07) * column 4, line 13 - line 51 * | 1-4 | |
| A | GB 2 099 302 A (PAN BRITANNICA IND LTD) 8 December 1982 (1982-12-08) * page 1, line 64 - line 87 * | 1-4 | TECHNICAL FIELDS SEARCHED (Int.Cl.7) C05B C05C |

The present search report has been drawn up for all claims

| Place of search | Date of completion of the search | Examiner |
|---|---|---|
| Munich | 12 November 2004 | Saldamli, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 42 5040

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2004

| Patent document cited in search report | | Publication date | Patent family member(s) | | Publication date |
|---|---|---|---|---|---|
| US 6312493 | B1 | 06-11-2001 | AU | 1075601 A | 10-05-2001 |
| | | | CA | 2386510 A1 | 12-04-2001 |
| | | | EP | 1230195 A1 | 14-08-2002 |
| | | | JP | 2003511333 T | 25-03-2003 |
| | | | MX | PA02003511 A | 02-09-2002 |
| | | | NO | 20021662 A | 03-06-2002 |
| | | | NZ | 518310 A | 27-02-2004 |
| | | | WO | 0125168 A1 | 12-04-2001 |
| US 2002129632 | A1 | 19-09-2002 | NONE | | |
| US 5286272 | A | 15-02-1994 | NONE | | |
| US 5514200 | A | 07-05-1996 | AT | 256091 T | 15-12-2003 |
| | | | AU | 1739795 A | 21-08-1995 |
| | | | BR | 9506959 A | 16-09-1997 |
| | | | CA | 2182300 A1 | 10-08-1995 |
| | | | DE | 69532275 D1 | 22-01-2004 |
| | | | DE | 69532275 T2 | 21-10-2004 |
| | | | EP | 1386897 A2 | 04-02-2004 |
| | | | EP | 0743931 A1 | 27-11-1996 |
| | | | ES | 2208675 T3 | 16-06-2004 |
| | | | PT | 743931 T | 30-04-2004 |
| | | | WO | 9521142 A1 | 10-08-1995 |
| | | | US | 6113665 A | 05-09-2000 |
| | | | US | 2003101784 A1 | 05-06-2003 |
| | | | US | 5830255 A | 03-11-1998 |
| GB 2099302 | A | 08-12-1982 | NONE | | |

EPO FORM P0459

For more details about this annex : see Official Journal of the European Patent Office, No. 12/82